# NEUE EUROPÄISCHE PATENTSCHRIFT

(11) **EP 2 231 548 B2**
(45) Veröffentlichungstag und Bekanntmachung des Hinweises auf die Entscheidung über den Einspruch: **16.01.2019**
(45) Hinweis auf die Patenterteilung: 22.04.2015
(21) Anmeldenummer: 08875087.2
(22) Anmeldetag: 15.12.2008
(51) Int. Cl.: C04B 40/00, C04B 103/65, C04B 111/27, C04B 24/08

(54) **FETTSÄURESALZGEMISCH ALS HYDROPHOBIERUNGSMITTEL FÜR BAUMATERIALEN**
FATTY ACID SALT MIXTURE AS A HYDROPHOBING AGENT FOR CONSTRUCTION MATERIALS
MÉLANGE DE SELS D'ACIDE GRAS COMME AGENTS DE TRAITEMENT HYDROPHOBE POUR DES MATÉRIAUX DE CONSTRUCTION

(30) Priorität: 27.12.2007 DE 102007062772
(43) Veröffentlichungstag der Anmeldung: 29.09.2010
(73) Patentinhaber: Baerlocher GmbH, 85716 Unterschleissheim (DE)
(72) Erfinder: Jürgen Hauk, 85354 Freising (DE)
(74) Vertreter: Herzog, Fiesser & Partner Patentanwälte PartG mbB
(86) Internationale Anmeldenummer: PCT/EP2008/010656
(87) Internationale Veröffentlichungsnummer: WO 2009/083128

(56) Entgegenhaltungen:
- EP-A- 1 547 987
- WO-A-00/23393
- DE-A1- 10 160 130
- GB-A- 535 739
- GB-A- 2 343 448
- JP-A- H10 139 510
- JP-A- 2006 225 214
- US-A- 4 221 599
- CHEMICAL ABSTRACTS, Bd. 105, Nr. 6, 11. August 1986 (1986-08-11), Columbus, Ohio, US; abstract no.: 47964, SAITO, K.: "Concrete waterproofing agent" Seite 321 XP000213297 & JP 61 021989 A (HOECHST GOSEI KK) 30. Januar 1986 (1986-01-30)
- <<<N O N - C I T E D D O C U M E N T>>> Rezeptur & Analysenreport Magnesiumstearat & Analyse Natriumoleat & Rechnung & Bestätigung eines Kunden & Auszug aus Produktbroschüre
- <<<N O N - C I T E D D O C U M E N T>>> CHEMICAL ABSTRACTS, vol. 105, no. 6, 11 August 1986 (1986-08-11), Columbus, Ohio, US; abstract no.: 47964, SAITO K.: "Concrete waterproofing agent", page 321, XP000213297
- <<<N O N - C I T E D D O C U M E N T>>> "STICHWORT "PALMKERNÖL"" In: JÜRGEN FALBE; MANFRED REGITZ: "RÖMPP CHEMIE LEXIKON", 1991, THIEME VERLAG, STUTTGART, DE
- <<<N O N - C I T E D D O C U M E N T>>> "STICHWORT "RINDERTALG"" In: JÜRGEN FALBE; MANFRED REGITZ: "RÖMPP CHEMIE LEXIKON", 1992, THIEME VERLAG, STUTTGART, DE
- <<<N O N - C I T E D D O C U M E N T>>> ANALYSEERGEBNISSE BÄROPHOB HF 6 S & Auszug DPMA-Register "Bärophob" & Produktinformation Bärophob HF 6 S & Sicherheitsdatenblatt Bärophob HF 6 S
- <<<N O N - C I T E D D O C U M E N T>>> Analyseergebnisse Bärophob HF 2 & Auszug DPMA-Register "Bärophob" & Prospekt "Produkte für den Bautenschutz"
- <<<N O N - C I T E D D O C U M E N T>>> Programm 2. Congresso Nacional de Argamasses de Construcao & Power Point Präsentation "Oleochemicals-important additives for buiilding protection"
- <<<N O N - C I T E D D O C U M E N T>>> "STICHWORT "METALLSEIFEN"" In: JÜRGEN FALBE; MANFRED REGITZ: "RöMPP CHEMIE LEXIKON", THIEME VERLAG, STUTTGART, DE
- <<<N O N - C I T E D D O C U M E N T>>> Broschüre "Hydrophobic Agents for Building Materials"
- <<<N O N - C I T E D D O C U M E N T>>> Vergleichsversuche Bearlocher GmbH

## Beschreibung

Gegenstand der Erfindung sind ein mineralisches Baumaterial enthaltend Fettsäuresalzgemische, die sich als Hydrophobierungsmittel eignen, sowie Bauteile. Die Fettsäuresalzgemische enthalten Fettsäuresalze unter denen der Anteil der Fettsäuresalze von Fettsäuren mit 8 bis 17 C-Atomen, bezogen auf die Gesamtmenge der Fettsäuresalze im Fettsäuresalzgemisch, 20 Gew.-% oder mehr als 20 Gew.-% ausmacht und der Anteil an Fettsäuren mit 8 bis 14 C-Atomen 10 Gew.-% oder mehr als 10 Gew.-%, bezogen auf die Gesamtmenge der Fettsäuresalze im Fettsäuresalzgemisch ausmacht, sowie einen mehrwertigen Alkohol, der nur Kohlenstoff, Wasserstoff und Sauerstoff als atomare Bestandteile aufweist.

Die Fettsäuresalze umfassen ein Gemisch von Salzen das mindestens zwei verschiedene Kationen, beispielsweise Metallkationen oder Ammoniumkationen oder beides enthält, wobei die Metallkationen aus der Gruppe bestehend aus Alkali-, Erdalkali-, Zink-, Aluminium- und seltene Erden Kationen ausgewählt sind. Die Fettsäuresalzgemische sind zur hydrophobierenden Ausrüstung von mineralischen Baumaterialien geeignet.

Mineralische Baumaterialien, beispielsweise Putz für Außenwände, werden oft hydrophobisiert, um zu möglichst weitgehend zu verhindern, dass die ausgehärteten Materialien Feuchtigkeit aus der Umgebung aufnehmen. Unter "Hydrophobieren" wird dabei die wasserabweisende Ausrüstung eines Baustoffes verstanden. Dabei wird ein physikalisch-chemischer Effekt genutzt, der sich aus den Kapillargesetzen ableiten lässt. Das Hydrophobieren ist üblicherweise ein Imprägniervorgang, mit dessen Hilfe oft der Benetzungswinkel des Wassers gegenüber dem Baustoff angehoben wird. Die kapillare Saugfähigkeit kann dadurch vermindert oder aufgehoben werden und die Wasseraufnahmefähigkeit der Baustoffe wird häufig reduziert (die Baustoffe werden hydrophobiert), ohne dass die für die Atmungsaktivität des Baustoffs wichtige Wasserdampfdurchlässigkeit wesentlich verändert wird. Es erfolgt nämlich in der Regel keine Abdichtung der Kapillaren, sondern mindestens überwiegend nur eine Beschichtung der Kapillarwände unter weitgehender Beibehaltung der für die Diffusionsvorgänge notwendigen Offenporigkeit. Hydrophobierungen sind demzufolge in der Regel keine Abdichtungsmaßnahmen.

Nach dem Stand der Technik können als Hydrophobisierungsmittel Metallseifen oder Silikonverbindungen verwendet werden. Bei den Metallseifen handelt es sich oft um Salze von Fettsäuren mit 18 Kohlenstoffatomen, insbesondere um Stearate und Oleate. Außerdem werden Derivate von Fettsäuren, wie Ester, und Fette und Öle als Hydrophobierungsmittel eingesetzt.

Die EP 1 328 486 B1 betrifft granulierte hydrophobierende Zusatzstoffe für Zementzusammensetzungen. Diese enthalten Salze der Palmitin-, Stearin- oder Ölsäure, ein Organopolysiloxan, gegebenenfalls Paraffin und ein Bindemittel.

Die DE 103 23 205 A1 offenbart hydrophobierende Additive auf der Basis von Fettsäuren und deren Derivaten. Die Fettsäuren werden in Verbindung mit wasserlöslichen Schutzkolloiden und gegebenenfalls in Kombination mit Antiblockmitteln und Organosiliciumverbindungen eingesetzt.

Gegenstand der DE 10101190 A1 sind Pulver-Zusammensetzungen zur Hydrophobierung von Baustoffmassen, die mindestens einen Carbonsäureester enthalten.

Die deutschen Offenlegungsschrift 2341085 offenbart Bautenbeschichtungsmittel bestehend aus Zement oder Kalk, Füllstoffen und Wasser, die zusätzlich Saccharoseester von Fettsäuren enthalten.

Die deutsche Offenlegungsschrift DE 10 2004 059 377 A1 offenbart ein hydrophobierendes, in Wasser redispergierbares Polymerpulver auf der Basis eines Polymerisats, eines Schutzkolloids und gegebenenfalls weiteren Zusatzstoffen, wie Fettsäuren, Fettsäurederivaten und Antiblockmitteln. Ähnliche Zusammensetzungen werden in der DE 10 2004 026 610 A1 beschrieben.

Die EP 0 351 521 B1 beschreibt Grundierungszusammensetzungen für ein wasserdicht machendes Mittel, das Fettsäuren, Bindemittel und organische Lösungsmittel enthält.

Die EP 1 328 486 B1 beschreibt ein granuliertes Hydrophobierungsmittel für Zementzusammensetzungen, das Fettsäuresalze der Palmitin-, Stearin- oder Ölsäure in Verbindung mit einem wasserlöslichen oder wasserdispergierbarem Bindemittel und gegebenenfalls einem Organopolysiloxan enthält.

Die DE 3238390 A1 betrifft Trockenmörtel mit Bindemitteln auf Zement- oder Gipsbasis, die Glycerinester höherer Fettsäuren enthalten können.

Gegenstand der DE 196 33 131 A1 sind gipshaltige Zusammensetzungen, die eine Vielzahl von Fettsäurederivaten, wie epoxidierte Öle, polymerisierte Fettsäuren und modifizierte Fettsäuren enthalten können.

Die japanische Offenlegungsschrift JP 02142880 A offenbart die Verbesserung der wasserabweisenden Eigenschaften von Gips durch Zusatz von natürlichen Ölen, wie Leinöle oder Kokosnussöl.

Die DE 103 51 259 A1 betrifft Hydrophobierungsmittel für Trockenmörtel, die Fettsäuren enthalten. Dabei sind Stearate und Oleate bevorzugt.

Die US 3,009,820 offenbart Zusammensetzungen, bei denen Öle aus der Holzverarbeitung mit Calciumhydroxid behandelt werden. Solche Öle enthalten einen hohen Anteil langkettiger Fettsäuren.

Bei den bekannten Hydrophobierungsmitteln tritt das Problem auf, dass die hydrophobierende Wirkung nach der Aushärtung häufig innerhalb von wenigen Tagen oder Wochen abnimmt. So zeigt sich bei der Verwendung von Metallseifen, insbesondere bei der Verwendung der nach dem Stand der Technik üblichen Stearate und Oleate, eine signifikante Abnahme der wasserabweisenden Eigenschaften bereits nach etwa 4 Wochen. Dieses Problem tritt besonders bei der Verwendung von Putzen auf der Basis von Zement oder Mörtel auf.

Ein weiteres Problem ist die nicht immer zufriedenstellende Handhabbarkeit der bekannten Hydrophobierungsmittel. So sind insbesondere die bekannten Mittel wie Zinkstearat nur schwer benetzbar, was die gleichmäßige Einarbeitung in ein Baumaterial erschwert. Solche Hydrophobierungsmittel neigen zur Verklumpung, was die wasserabweisenden Eigenschaften des ausgehärteten Bauteils insgesamt beeinträchtigt.

Der vorliegenden Erfindung liegt damit die Aufgabe zugrunde, ein mineralisches Baumaterial enthaltend ein Fettsäuresalz- gemisch bereitzustellen, das bei einem Einsatz als Hydrophobierungsmittel die genannten Probleme überwindet. Das Fettsäuresalzgemisch soll einen ausgeprägten Hydrophobierungseffekt auch über längere Zeiträume gewährleisten. Außerdem sollen eine gute Handhabbarkeit und eine gleichmäßige Verteilung in ein Baumaterial gewährleistet sein. Dadurch sollen Abschwächungen der wasserabweisenden Wirkung und die Verhinderung von Ausblühungen im Produkt durch unregelmäßige Verteilung verhindert oder zumindest deutlich abgeschwächt werden.

Die JP2006225214 offenbart mineralische Baustoffe, welche durch Vermengung von 400 T Zement, 610 T Standardsand, 180 T Quarzsand, 225 T Wasser und zum Zweck der Hydrophobierung mit 8 T einer fettsäuresalzhaltigen Mischung entstehen. Letztere fettsäuresälzhaltige Mischung enthält 60-75 Gew% Kaliumsalz einer 12 - 14 C-atomigen Fettsäure und 25-40 Gew% Kaliumsalz einer 16 - 18 C-atomigen Fettsäure. Der Anteil der Fettsäuresalze mit 8 - 14 C-Atomen an der Gesamtmenge dieser Kombination von Fettsäuresalzen beträgt somit 60-75 Gew%. Allerdings handelt es sich in beiden Fällen um Salze desselben Metallkations, nämlich Kalium. Bezüglich des Herstellungsverfahrens des Fettsäuresalzgemischs wird lediglich das Ergebnis "Mischung" erwähnt.

Das Fettsäuresalzgemisch soll außerdem auf einfache Art und Weise und möglichst kostengünstig herstellbar sein. Es soll eine hohe Lagerstabilität aufweisen und für ein breites Spektrum von Anwendungen geeignet sein.

Soweit nicht anders vermerkt, beziehen sich Angaben in % nachfolgend auf Gewichts-%.

Das der Erfindung zugrunde liegende Problem wird überraschenderweise gelöst durch ein mineralisches Baumaterial enthaltend Fettsäuresalzgemische, mineralischen Baumaterialien und Bauteilen wie sie im Rahmen des vorliegenden Texts beschrieben werden.

Gegenstand der Erfindung ist ein mineralisches Baumaterial enthaltend ein Fettsäuresalzgemisch, enthaltend ein Gemisch aus Fettsäuresalzen von mindestens zwei verschiedenen Metallkationen oder zwei verschiedenen Ammoniumkationen oder einem Gemisch aus mindestens einem Metallkation und mindestens einem Ammoniumkation, wobei die Metallkationen aus der Gruppe bestehend aus Alkalimetallen, Erdalkalimetallen, Zink, Aluminium und seltenen Erden ausgewählt werden und wobei der Anteil der Fettsäuresalze von Fettsäuren mit 8 bis 17 C-Atomen, bezogen auf die Gesamtmenge der Fettsäuresalze im Fettsäuresalzgemisch, 20 Gew.-% oder mehr als 20 Gew.-% ausmacht und der Anteil an Fettsäuren mit 8 bis 14 C-Atomen mehr als 10 Gew.-%, bezogen auf die Gesamtmenge der Fettsäuresalze im Fettsäuresalzgemisch, ausmacht, sowie einen mehrwertigen Alkohol, der nur Kohlenstoff, Wasserstoff und Sauerstoff als atomare Bestandteile aufweist.

Als "Fettsäuren" werden im Sinne der Erfindung Mono- oder Polycarbonsäuren mit mindestens 6 C-Atomen bezeichnet, also Verbindungen, die mindestens eine Carboxylgruppe und verzweigte oder unverzweigte Kohlenstoffketten aufweisen. Unter "Fettsäuresalzen" werden im Rahmen des vorliegenden Textes Salze, insbesondere die Metallsalze der oben genannten Fettsäuren verstanden. Die Fettsäuresalze werden auch als Seifen bezeichnet. Eine "Fettsäure" im erfindungsgemäßen Sinn kann darüber hinaus noch Doppelbindungen, Hydroxy- oder Epoxygruppen tragen.

Als Bestandteil der Fettsäuresalzgemische eignen sich die Salze der gesättigten sowie die Salze der ungesättigten Fettsäuren. Es kann bevorzugt sein, die Salze der gesättigten Fettsäuren einzusetzen, in einigen Fällen hat es sich jedoch auch als vorteilhaft erwiesen, die Salze der ungesättigten Fettsäuren einzusetzen.

Als Metallkationen zur Bildung der Fettsäuresalzgemische eignen sich Metallkationen ausgewählt aus der Gruppe der Kationen von Alkalimetallen, Erdalkalimetallen, Zink, Aluminium und seltenen Erden.

Bevorzugte Alkalimetallsalze sind die Salze des Lithiums, Natriums und Kaliums. Bevorzugte Erdalkalimetallsalze sind die Salze des Magnesiums, Calciums, Strontiums und Bariums. Unter den Salzen der seltenen Erden eignen sich insbesondere Cer und Lanthan.

In einer bevorzugten Ausführungsform der Erfindung handelt es sich bei den Fettsäuresalzen um ein Gemisch, das mindestens en Fettsäuresalz aus der Gruppe der Alkalimetallsalze und mindestens ein Fettsäuresalz aus der Gruppe der Erdalkalimetallsalze oder der Salze mindestens eines Metalls aus der Gruppe der seltenen Erden enthält. Es kann bevorzugt sein, wenn ein Fettsäuresalzgemisch ein Gemisch aus mindestens einem Alkalimetallsalz und mindestens einem Erdalkalimetallsalz enthält Beispielsweise eignen sich Fettsäuresalzgemische, die Natrium-, oder Kalium- und Calcium- oder Magnesiumsalze entsprechend geeigneter Fettsäuren enthalten.

In einer weiteren bevorzugten Ausführungsform wird beispielsweise ein Gemisch aus Natrium- und Calciumsalzen eingesetzt. In einer weiteren bevorzugten Ausführungsform der Erfindung handelt es sich bei den Fettsäuresalzgemischen um ein Gemisch aus etwa 10 bis etwa 50 Gew.-% Natriumsalzen und etwa 90 bis etwa 50 Gew.-% Calciumsalzen, bezogen auf das Gesamtgewicht der Fettsäuresalze im Fettsäuresalzgemisch. Besonders bevorzugt ist der Einsatz von Natrium- und Calciumsalzen im Gewichtsverhältnis von etwa 1:2.

Wenn ein Fettsäuregemisch Fettsäuren unterschiedlicher Kettenlänge enthält, so kann es grundsätzlich möglich sein, dass die Metallkationen im Wesentlichen statistisch verteilt auf die Fettsäuren mit unterschiedlichen Kettenlängen vorliegen. Wenn ein Fettsäuregemisch gesättigte und ungesättigte Fettsäuren enthält, so kann es grundsätzlich möglich sein, dass die Metallkationen im Wesentlichen statistisch verteilt auf die gesättigten und die ungesättigten Fettsäuren vorliegen. Es ist jedoch im Rahmen der vorliegenden Erfindung ebenso vorgesehen, dass unterschiedliche Fettsäuren, die sich beispielsweise in der Kettenlänge oder in der Sättigung unterscheiden in statistisch signifikanter Weise unterschiedliche Metallkationen aufweisen.

So ist es beispielsweise möglich, dass ein Fettsäuresalzgemisch zwei oder mehr Salze von Fettsäuren enthält, wobei beispielsweise jeweils ein bestimmter Fettsäurerest ein bestimmtes Metallkation trägt, während ein anderer Fettsäurerest ein anderes Metallkation trägt. Dabei können beispielsweise Gemische von Fettsäuresalzen bevorzugt sein, die ein Gemisch von Natrium- und Calciumkationen enthalten.

Geeignete Fettsäuresalzgemische werden beispielsweise in einer besonderen Ausführungsform erhalten, wenn ein Fett oder Öl mit geeigneten Metallverbindungen, beispielsweise Metalloxiden, Metallhydroxiden, Metallcarbonaten oder Metallsalzen von Mineralsäuren, beispielsweise Natriumhydroxid und Calciumhydroxid, umgesetzt wird.

Dabei kann beispielsweise zuerst ein bestimmtes Metallsalz und anschließend ein weiteres Metallsalz zum Reaktionsgemisch gegeben werden. Die Mengen der Metallsalze werden beispielsweise stöchiometrisch zu den Mengen der gewünschten Salze ausgewählt. In einer besonderen Ausführungsform der Erfindung kann das unmittelbare Verfahrensprodukt einer solchen Reaktion als Fettsäuresalzgemisch eingesetzt werden. In diesem Fall sind nach dem Hydrolyseschritt keine weiteren Aufreinigungsschritte erforderlich.

Als Kationen in geeigneten Fettsäureammoniumsalzen eignen sich im Rahmen der vorliegenden Erfindung grundsätzlich alle Verbindungen, die durch entsprechende Umsetzung zu einem Ammoniumsalz der entsprechenden Fettsäure führen. Im Rahmen des vorliegenden Textes wird dabei auch Ammoniak als "Amin" bezeichnet. Dabei können erfindungsgemäße Ammoniumsalze beispielsweise durch entsprechende Umsetzung von Aminen oder Amiden wie Alkylmonoaminen, Alkyldiaminen, Alkylpolyaminen, Dialkylaminen oder Polyalkylaminen erhalten werden. Geeignete Ammoniumsalze leiten sich daher beispielsweise von primären Mono- oder Polyaminoverbindungen mit 2 bis etwa 40, beispielsweise 6 bis etwa 20 C-Atomen ab. Beispielsweise sind dies Ammoniak, Methylamin, Ethylamin, n-Propylamin, i-Propylamin, n-Propylamin, sek.-Propylamin, tert.-Butylamin, die isomeren Pentylamine, Hexylamine, Heptylamine und deren höhere Homologen mit 8, 9, 10, 11, 12, 13, 14, 15, 16, 17, 18, 19, 20, 21 oder 22 C-Atomen, beispielsweise Stearylamin, 1-Aminoisobutan, substituierte Amine mit 2 bis etwa 20 C-Atomen wie 2-(N,N-Dimethylamino)-1-aminoethan. Geeignete Diamine sind weisen beispielsweise ein Molekulargewicht von etwa 32 bis etwa 200 g/mol auf, wobei die entsprechenden Diamine beispielsweise zwei primäre, zwei sekundäre oder eine primäre und eine sekundäre Aminogruppe aufweisen. Beispiele hierfür sind Diaminoethan, die isomeren Diaminopropane, die isomeren Diaminobutane, die isomeren Diaminohexane, Piperazin, 2,5-Dimethylpiperazin, Amino-3-aminomethyl-3,5,5-trimethylcyclohexan (Isophorondiamin, IPDA), 4,4'-Diaminodicyclohexylmethan, 1,4-Diaminocyclohexan, Aminoethylethanolamin, Hydrazin, Hydrazinhydrat oder Triamine wie die Diethylentriamin oder 1,8-Diamino-4-aminomethyloctan. Triethylamin, Tributylamin, Dimethylbenzylamin, N-Ethyl-, N-Methyl-, N-Cyclohexylmorpholin, Dimethylcyclohexylamin, Dimorpholinodiethylether, 1,4-Diazabicyclo[2,2,2]octan, 1-Azabicyclo[3,3,0]octan, N,N,N',N'-Tetramethylethylendiamin, N,N,N',N'-Tetramethylbutandiamin, N,N,N',N'-Tetramethylhexandiamin-1,6, Pentamethyldiethylentriamin, Tetramethyldiaminoethylether, Bis-(dimethylaminopropyl)-harnstoff, N,N'-Dimethylpiperazin, 1,2-Dimethylimidazol oder Di-(4-N,N-dimethylaminocyclohexyl)-methan.

Ebenfalls geeignet sind aliphatische Aminoalkohole mit 2 bis etwa 40, vorzugsweise 6 bis etwa 20 C-Atomen, beispielsweise Triethanolamin, Tripropanolamin, Tributanolamin, Tripentanolamin, 1-Amino-3,3-dimethyl-pentan-5-ol, 2-Aminohexan-2',2"-diethanolamin, 1-Amino-2,5-dimethylcyclohexan-4-ol- 2-Aminopropanol, 2-Aminobutanol, 3-Aminopropanol, 1-Amino-2-propanol, 2-Amino-2-methyl-1-propanol, 5-Aminopentanol, 3-Aminomethyl-3,5,5-trimethylcyclohexanol, 1-Amino-1-cyclopentan-methanol, 2-Amino-2-ethyl-1,3-propandiol, 2-(Dimethylaminoethoxy)-ethanol, aromatisch-aliphatische oder aromatisch-cycloaliphatische Aminoalkohole mit 6 bis etwa 20 C-Atomen, wobei als aromatische Strukturen heterocyclische oder isocyclische Ringsysteme wie Naphthalin- oder insbesondere Benzolderivate wie 2-Aminobenzylalkohol, 3-(Hydroxymethyl)anilin, 2-Amino-3-phenyl-1-propanol, 2-Amino-1-phenylethanol, 2-Phenylglycinol oder 2-Amino-1-phenyl-1,3-propandiol sowie Gemische aus zwei oder mehr solcher Verbindungen.

Ebenfalls als Ammoniumsalze geeignet sind beispielsweise Verbindungen, in denen die Aminogruppe an einem substituierten aromatischen oder heteroaromatischen System gebunden vorliegt, beispielsweise Aminobenzoesäure, Aminosalicylsäure oder Aminopyridincarbonsäure und deren geeignete Derivate.

In einer weiteren Ausführungsform der Erfindung beträgt der Anteil der Fettsäuresalze mit 8 bis 17 C-Atomen an den gesamten Fettsäuresalzen mehr als 30, 50, 60, 70 oder 80 Gew.-%.

Im Rahmen einer weiteren Ausführungsform der Erfindung beträgt der Anteil an Fettsäuren mit 8 bis 14 C-Atomen 10 Gew.-% oder mehr als 10 Gew.-%, beispielsweise mehr als bezogen auf die Gesamtmenge der Fettsäuresalze im Fettsäuresalzgemisch, beispielsweise 20 Gew.-% oder mehr als 20 Gew.-% oder 30 Gew.-% oder mehr als 30 Gew.-% oder 40 Gew.-% oder mehr als 40 Gew.-% oder 50 Gew.-% oder mehr als 50 Gew.-% oder 60 Gew.-% oder mehr als 60 Gew.-% oder 70 Gew.-% oder mehr als 70 Gew.-% oder 80 Gew.-% oder mehr als 80 Gew.-% oder 90 Gew.-% oder mehr als 90 Gew.-%.

In einer weiteren Ausführungsform der Erfindung ist das Fettsäuresalz, das an den gesamten Fettsäuresalzen den größten Anteil in Gewichtsprozent ausmacht, ein Salz einer Fettsäure mit 8 bis 17 C-Atomen. Besonders bevorzugt handelt es sich dabei um ein Laurat oder ein Myristat.

In einer bevorzugten Ausführungsform der Erfindung beträgt die mittlere Kettenlänge der gesamten im Fettsäuresalzgemisch vorliegenden Fettsäuresalze 9 bis 16 C-Atome, insbesondere 10 bis 14 C-Atome.

In einer bevorzugten Ausführungsform der Erfindung enthält ein Fettsäuresalzgemisch Fettsäuresalze ausgewählt aus der Gruppe bestehend aus Fettsäuresalzen der Capryl-, Pelargon-, Caprin-, Laurin-, Laurolein-, Myristin-, Myristolein-, Palmitin-, Palmitolein-, Margarin-, Undecylen- und Palmitoleinsäure. Weitere bevorzugte Fettsäuren sind Linolsäure und Linolensäure. Darüber hinaus sind beispielsweise Fettsäuren geeignet, die eine oder mehrere OH-Gruppen oder eine oder mehrere Epoxygruppen aufweisen.

In einer weiteren Ausführungsform der Erfindung macht die Summe der Anteile der Fettsäuresalze der Caprylate, Laurate und Myristate an den gesamten im erfindungsgemäßen Fettsäuresalzgemisch vorliegenden Fettsäuresalzen mehr als 50 Gewichts-% aus. In einer weiteren Ausführungsform ist der Anteil der Laurate größer als 30, insbesondere größer 40 Gew.-%. In einer bevorzugten Ausführungsform der Erfindung ist der Anteil der Stearate geringer als 10 %, insbesondere geringer als 5 %. In einer weiteren bevorzugten Ausführungsform ist der Anteil der Oleate geringer als 15 %, insbesondere geringer als 10 %. Besonders bevorzugt ist, wenn in dem Hydrophobierungsmittel der Anteil an Salzen von Fettsäuren mit 18 Kohlenstoffatomen, insbesondere von Stearaten und/oder Oleaten, geringer als 25 %, insbesondere geringer als 15 % oder 10 % ist.

In einer weiteren Ausführungsform der Erfindung liegt der Gesamtanteil der Fettsäuresalze am Fettsäuresalzgemisch zwischen 5 und 95 Gew.-%, besonders bevorzugt zwischen 10 und 90 % oder zwischen 20 und 85 %. In bevorzugten Ausführungsformen ist der Anteil der Fettsäuresalze höher als 10 %, 20 % oder 50 %.

In einer weiteren Ausführungsform der Erfindung sind die Fettsäuresalze Hydrolyseprodukte eines natürlichen Fettes oder Öles. "Natürlich" bedeutet im Sinne der Erfindung, dass das Fett oder Öl ursprünglich aus einer natürlichen Quelle stammt. Das Fett oder Öl kann aber auch nachbehandelt sein, beispielsweise durch teilweise oder vollständige Hydrierung oder durch Epoxydierung von Doppelbindungen. Dem Fett oder Öl können auch Zusätze beigemischt sein. Besonders geeignet sind natürliche Fette oder Öle, die einen vergleichsweise hohen Anteil von Fettsäuren mit niedrigen Kettenlängen enthalten. Besonders bevorzugt ist die Verwendung von Kokosöl, insbesondere von Kokosöl mit einem hohen Anteil an Laurinsäure (zwischen 45 und 51 Gew.-%) und Myristinsäure (16,5 bis 18,5 Gew.-%), das auch als Kokosfett oder Kokosbutter bezeichnet wird. Ebenfalls geeignet ist Palmkemfett. Die Hydrolyse der natürlichen Fette erfolgt beispielsweise durch Zusatz von Metallhydroxiden.

Ein Fettsäuresalzgemisch enthät neben den oben beschriebenen Fettsäuresalzen noch weitere inhaltsstoffe zwingend enthalten ist ein mehrwertiger Alkohol, der nur kohleenstoff, Wasserstoff und Sauerstoff als atomare Bestandteile aufweist. Als mehrwertige Alkohole werden Verbindungen bezeichnet, die mindestens 2 OH-Gruppen aufweisen. Grundsätzlich eignen sich lineare, verzweigte, gesättigte oder ungesättigte sowie homocyclische oder heterocyclische ungesättigte Alkohole als Bestandteil der Fettsäuresalzgemische. Es hat sich jedoch in einigen Fällen als vorteilhaft erwiesen, wenn als mehrwertige Alkohole Verbindungen eingesetzt werden, die nur Kohlenstoff, Wasserstoff und Sauerstoff als atomare Bestandteile aufweisen. Die Molmasse entsprechender mehrwertiger Alkohole kann zwischen etwa 62 (Ethylenglykol) und mehreren Tausend, beispielsweise etwa 100.000, liegen. Ein Fettsäuresalzgemisch kann dabei beispielsweise nur einen mehrwertigen Alkohol oder zwei oder mehr mehrwertige Alkohole enthalten. Die Alkohole können sich beispielsweise in ihrer Molmasse oder in der Zahl der OH-Gruppen oder in mehreren unterschiedlichen Merkmalen unterscheiden.

Geeignet sind beispielsweise mehrwertige Alkohole wie Ethylenglykol, Propylenglykol, Butylenglykol, Pentylenglykol, Hexylenglykol, Propantriol, Trimethylolpropan, Pentaerythrit, Dihydroxycyclohexan, Diethylenglykol, Triethylenglykol sowie die Dimeren, trimeren oder oligomeren Derivate der oben genannten Dialkohole, Oligoglycerin, Polyglycerin, Polyvinylalkohol und dergleichen.

E kann bevorzugt sein, wenn ein Fettsäuresalzgemisch einen niedermolekularen mehrwertigen Alkohol mit 2, 3, oder 4 OH-Gruppen, insbesondere Propantriol enthält.

Der Anteil an mehrwertigem Alkohol oder mehrwertigen Alkoholen, beträgt, sofern diese Verbindungen im Fettsäuresalzgemisch enthalten sind, bis zu etwa 40 Gew.-%, insbesondere etwa 1 bis etwa 30 oder etwa 5 bis etwa 20 oder etwa 8 bis etwa 13 Gew.-%.

Ein Fettsäuresalzgemisch kann darüber hinaus einen oder mehrere Monoalkohole, beispielsweise Fettalkohole, enthalten. Geeignet sind hierbei lineare oder verzweigte, gesättigte oder ungesättigte aliphatische, monofunktionelle Alkohole, insbesondere Methanol, Ethanol, die Isomeren des Propanols, Butanols oder Hexanols sowie Fettalkohole mit etwa 8 bis etwa 22 C-Atomen, beispielsweise Octanol, Decanol, Dodecanol, Tetradecanol, Hexadecanol oder Octadecanol eingesetzt werden. Die genannten Fettalkohole sind beispielsweise durch Reduktion von natürlichen Fettsäuren erhältlich und können sowohl als Reinsubstanzen als auch in Form ihrer technischen Gemische eingesetzt werden. Gut geeignet sind beispielsweise lineare Monoalkohole und insbesondere solche mit etwa 4 bis etwa 18 C-Atomen. Anstelle der linearen oder verzweigten aliphatischen Alkohole oder in Abmischung mit diesen sind auch Monoalkylpolyetheralkohole unterschiedlichen Molekulargewichts, vorzugsweise in den Molekulargewichtsbereichen von etwa 1.000 bis etwa 2.000 einsetzbar.

Das Fettsäuresalzgemisch lässt sich grundsätzlich zu beliebigen Zwecken einsetzen. Es hat sich jedoch im Rahmen der vorliegenden Erfindung gezeigt, dass das Fettsäuresalzgemisch sich ausgezeichnet dazu eignet, Baumaterialien bestimmte Eigenschaften im Hinblick auf ihre Wechselwirkung mit Wasser zu verleihen, insbesondere diese Baumaterialien zu hydrophobieren. Ein Fettsäuresalzgemisch gemäß Anspruch 1 eignet sich also als Hydrophobierungsmittel. Wenn im Rahmen des vorliegenden Textes auf Hydrophobierungsmittel Bezug genommen wird, so ist dies auch als Bezugnahme auf die Fettsäuresalzgemische zu verstehen.

In einer weiteren Ausführungsform der Erfindung enthält das Fettsäuresalzgemisch Zusatzstoffe. Geeignete Zusatzstoffe sind beispielsweise Lösungsmittel, Bindemittel, Lösungsvermittler, Füllstoffe, weitere Hydrophobierungsmittel, Tenside, Emulgatoren, Viskositätsverbesserer, Pigmente, Farbstoffe, Konservierungsstoffe, Geliermittel, Antibackmittel, pH-Modifikationsmittel, Puffer, Reaktionsbeschleuniger, Reaktionsverzögerer, Kolloide, Polymere oder Luftschleppmittel oder Gemische aus zwei oder mehr davon, enthalten.

Ein Fettsäuresalzgemisch kann beispielsweise zusätzlich Bindemittel, Tenside, Emulgatoren, Kolloide oder Polymere enthalten. Diese Zusatzstoffe sind beispielsweise enthalten, um die Dispergierbarkeit und Vermischbarkeit des Fettsäuresalzgemischs mit einem weiteren Material, insbesondere einem Baumaterial, zu verbessern. Einsetzbare entsprechende Zusatzstoffe sind Fettsäurederivate, wie Ester, Wachse, Polymere, insbesondere ionische Polymere und Tenside bzw. Emulgatoren.

Lösungsmittel sind beispielsweise dann in dem Fettsäuresalzgemisch enthalten, wenn es als flüssiges Mittel eingesetzt werden soll. Geeignete Lösungsmittel sind beispielsweise Wasser oder organische Lösungsmittel wie Alkohole, beispielsweise Ethanol.

Als Bindemittel werden beispielsweise wasserlösliche oder wasserdispergierbare Bindemittel eingesetzt. Solche Stoffe sind in der Literatur bekannt. Bevorzugt werden Stoffe eingesetzt, die bei Raumtemperatur, d.h. zwischen 20 und 25°C, eine wachsartige, hochviskose oder feste Konsistenz haben und die einen Schmelzpunkt von 25°C bis 150°C aufweisen. Beispiele für übliche entsprechende Bindungsmaterialien sind Polyvinylalkohol, Methylzellulose, Carboxymethylcellulose, ethoxylierte Fettalkohole oder Mischungen davon. Außerdem können Fettsäureester oder filmbildende Polymere eingesetzt werden. Die Bindungsmaterialien sollten nicht oder nur möglichst wenig den Hydratisierungsprozess des Baumaterials stören, wenn Wasser eingeführt wird.

Im Rahmen einer weiteren Ausführungsform der Erfindung enthält eine Zusammensetzung ein oder mehrere Tenside bzw. Emulgatoren. Als Tenside bzw. Emulgatoren eignen sich beispielsweise anionische Tenside, nichtionische Tenside oder kationische Tenside. Es hat sich in einigen Fällen herausgestellt, dass die Gegenwart von Tensiden die zur Erzielung eines gewünschten Hydrophobierungseffektes erforderliche Menge an Hydrophobiermittel senkt. Dies entspricht nicht der Erwartung bei Zugabe eines hydrophilen Stoffs und ist, ohne an eine bestimmte Theorie gebunden sein zu wollen, möglicherweise auf eine verbesserte Verteilung des Hydrophobiermittels in der Zusammensetzung zurückzuführen.

Typische Beispiele für im Rahmen der Fettsäuresalzgemischen (nachfolgend auch als "Zusammensetzungen" bezeichnet) geeignete anionische Tenside sind Seifen, Alkylbenzolsulfonate, sekundäre Alkansulfonate, Olefinsulfonate, Alkylethersulfonate, Glycerinethersulfonate, α-Methylestersulfonate, Sulfofettsäuren, Alkyl- und/oder Alkenylsulfate, Alkylethersulfate, Glycerinethersulfate, Hydroxymischethersulfate, Fettalkohol(ether)phosphate, Monoglycerid(ether)sulfate, Fettsäureamid(ether)sulfate, Mono- und Dialkylsulfosuccinate, Mono- und Dialkylsulfosuccinamate, Sulfotriglyceride, Amidseifen, Ethercarbonsäuren und deren Salze, Fettsäureisethionate, Fettsäuresarcosinate, Fettsäuretauride, N-Acylaminosäuren wie beispielsweise Acyllactylate, A-cyltartrate, Acylglutamate und Acylaspartate, Alkyloligoglucosidsulfate, Proteinfettsäurekondensate (insbesondere pflanzliche Produkte auf Weizenbasis) und Alkyl(ether)phosphate. Sofern die anionischen Tenside Polyglycoletherketten enthalten, können diese eine konventionelle, vorzugsweise jedoch eine eingeengte Homologenverteilung aufweisen.

Bevorzugt sind anionische Tenside ausgewählt aus der Gruppe, die gebildet wird von Alkyl- und/oder Alkenylsulfate, Alkylethersulfate, Alkylbenzolsulfonate, Seifen, Monoglycerid(ether)sulfate und Alkansulfonate, insbesondere Fettalkoholsulfate, Fettalkoholethersulfate, sekundäre Alkansulfonate und lineare Alkylbenzolsulfonate.

Unter Alkyl- und/oder Alkenylsulfaten, die auch häufig als Fettalkoholsulfate bezeichnet werden, sind die Sulfatierungsprodukte primärer Alkohole zu verstehen. Typische Beispiele für Alkylsulfate, die im Sinne der Erfindung Anwendung finden können, sind die Sulfatierungsprodukte von Capronalkohol, Caprylalkohol, Caprinalkohol, 2-Ethylhexylalkohol, Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol und Erucylalkohol sowie deren technischen Gemischen, die durch Hochdruckhydrierung technischer Methylesterfraktionen oder Aldehyden aus der Roelen'schen Oxosynthese erhalten werden. Die Sulfatierungsprodukte können vorzugsweise in Form ihrer Alkalisalze und insbesondere ihrer Natriumsalze eingesetzt werden. Besonders bevorzugt sind Alkylsulfate auf Basis von C_{16/18}-Talgfettalkoholen bzw. pflanzliche Fettalkohole vergleichbarer C-Kettenverteilung in Form ihrer Natriumsalze.

Alkylethersulfate ("Ethersulfate") stellen bekannte anionische Tenside dar, die großtechnisch durch SO₃- oder Chlorsulfonsäure (CSA)-Sulfatierung von Fettalkohol- oder Oxoalkoholpolyglycolethern und nachfolgende Neutralisation hergestellt werden. Typische Beispiele sind die Sulfate von Anlagerungsprodukten von durchschnittlich 1 bis 10 und insbesondere 2 bis 5 Mol Ethylenoxid an Capronalkohol, Caprylalkohol, 2-Ethylhexylalkohol, Caprinalkohol, Laurylalkohol, Isotridecylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol und Brassidylalkohol sowie deren technische Mischungen in Form ihrer Natrium- und/oder Magnesiumsalze. Die Ethersulfate können dabei sowohl eine konventionelle als auch eine eingeengte Homologenverteilung aufweisen. Besonders bevorzugt ist der Einsatz von Ethersulfaten auf Basis von Addukten von durchschnittlich 2 bis 3 Mol Ethylenoxid an technische C_{12/14}- bzw. C_{12/18}- Kokosfettalkoholfraktionen in Form ihrer Natrium- und/oder Magnesiumsalze.

Als Alkylbenzolsulfonate können beispielsweise Dodecylbenzolsulfonate, Tetradecylbenzolsulfonate, Hexadecylbenzolsulfonate sowie deren technische Gemische in Form der Natriumsalze eingesetzt werden.

Unter Seifen sind schließlich Fettsäuresalze der linearen oder verzweigten, gesättigten oder ungesättigten Carbonsäuren mit 6 bis 22 und vorzugsweise 12 bis 18 Kohlenstoffatomen zu verstehen, wobei als Kation beispielsweise ein Alkali- und/oder Erdalkali-, Ammonium-, Alkylammonium- oder Alkanolammoniumion vorliegen kann. Die hier genannten Seifen verstehen sich als Ergänzung zu gegebenenfalls im erfindungsgemäßen Gemisch vorliegenden Fettsäuresalzen und die hier vorgenommene fakultative Aufzählung berührt Angaben zu zwingend in der erfindungsgemäßen Zusammensetzung vorliegenden Fettsäuresalzen nicht. Sofern Angaben zu fakultativ vorliegenden Fettsäuresalzen mit Angaben zu zwingend vorliegenden Fettsäuresalzen kollidieren, so gehen die Angaben zu den zwingend vorliegenden Fettsäuresalzen in jedem Fall vor. Dies gilt beispielsweise für Stoffangaben genauso wie für Mengenangaben.

Typische Beispiele sind die Natrium-, Kalium-, Magnesium-, Ammonium- und Triethanolammoniumsalze der Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Beispielsweise werden Kokos- oder Palmkernfettsäure in Form ihrer Natrium- oder Kaliumsalze eingesetzt.

Monoglyceridsulfate und Monoglyceridethersulfate stellen bekannte anionische Tenside dar, die nach den einschlägigen Methoden der präparativen organischen Chemie erhalten werden können. Üblicherweise geht man zu ihrer Herstellung von Triglyceriden aus, die gegebenenfalls nach Ethoxylierung zu den Monoglyceriden umgeestert und nachfolgend sulfatiert und neutralisiert werden. Gleichfalls ist es möglich, die Partialglyceride mit geeigneten Sulfatierungsmitteln, vorzugsweise gasförmiges Schwefeltrioxid oder Chlorsulfonsäure umzusetzen. Typische Beispiele für im Sinne der Erfindung geeignete Monoglycerid(ether)sulfate sind die Umsetzungsprodukte von Laurinsäuremonoglycerid, Kokosfettsäuremonoglycerid, Palmitinsäuremonoglycerid, Stearinsäuremonoglycerid, Ölsäuremonoglycerid und Talgfettsäuremonoglycerid sowie deren Ethylenoxidaddukte mit Schwefeltrioxid oder Chlorsulfonsäure in Form ihrer Natriumsalze.

Die Zusammensetzungen können als Tenside oder als Emulgatoren nichtionische Tenside enthalten. Typische Beispiele für nichtionische Tenside sind Alkoxylate von Alkanolen, endgruppenverschlossene Alkoxylate von Alkanolen ohne freie OH-Gruppen, alkoxylierte Fettsäureniedrigalkylester, Hydroxymischether, Alkylphenolpolyglycolether, Fettsäurepolyglycolester, Fettsäureamidpolyglykolether, Fettaminpolyglykolether, alkoxylierte Triglyceride, Mischether bzw. Mischformale, Alk(en)yloligoglykoside, Fettsäure-N-alkylglucamide, Proteinhydrolysate (insbesondere pflanzliche Produkte auf Weizenbasis), Polyolfettsäureester, Zuckerester, Sorbitanester, Polysorbate und Aminoxide. Sofern die nichtionischen Tenside Polyglycoletherketten enthalten, können diese eine konventionelle, vorzugsweise jedoch eine eingeengte Homologenverteilung aufweisen.

Geeignet sind beispielsweise die nichtionische Tenside ausgewählt aus der Gruppe, die gebildet wird von Alkyl- und/oder Alkenyloligoglykoside, Hydroxymischethem, Alkoxylaten von Alkanolen, insbesondere Fettalkoholpolyethylenglykol/polypropylenglykolether (FAEO/PO) bzw. Fettalkoholpolypropylenglykol/polyethylenglykolether (FAPO/EO), endgruppenverschlossenen Alkoxylaten von Alkanolen, insbesondere endgruppenverschlossene Fettalkoholpolyethylenglykol/polypropylenglykolether bzw. endgruppenverschlossene. Fettalkoholpolypropylenglykol/polyethylenglykolether, und Fettsäureniedrigalkylestern und Aminoxiden.

Ebenfalls geeignet sind die Alkyl- und/oder Alkenyloligoglykoside. Die Alkyl- und/oder Alkenyloligoglykoside können sich von Aldosen bzw. Ketosen mit 5 oder 6 Kohlenstoffatomen, vorzugsweise der Glucose ableiten. Die bevorzugten Alkyl- und/oder Alkenyloligoglykoside sind somit Alkyl- und/oder Alkenyloligoglucoside. Der Oligomerisierungsgrad p, d. h. die Verteilung von Mono- und Oligoglykosiden, beträgt beispielsweise zwischen 1 und 10. Während p in einer gegebenen Verbindung stets ganzzahlig sein muss und hier vor allem die Werte p = 1 bis 6 annehmen kann, ist der Wert p für ein bestimmtes Alkyloligoglykosid eine analytisch ermittelte rechnerische Größe, die meistens eine gebrochene Zahl darstellt. Vorzugsweise werden Alkyl- und/oder Alkenyloligoglykoside mit einem mittleren Oligomerisierungsgrad p von 1,1 bis 3,0 eingesetzt. Aus anwendungstechnischer Sicht sind solche Alkyl- und/oder Alkenyloligoglykoside bevorzugt, deren Oligomerisierungsgrad kleiner als 1,7 ist und insbesondere zwischen 1,2 und 1,4 liegt. Der Alkyl- bzw. Alkenylrest kann sich von primären Alkoholen mit 4 bis 11, vorzugsweise 8 bis 10 Kohlenstoffatomen ableiten. Typische Beispiele sind Butanol, Capronalkohol, Caprylalkohol, Caprinalkohol und Undecylalkohol sowie deren technische Mischungen, wie sie beispielsweise bei der Hydrierung von technischen Fettsäuremethylestern oder im Verlauf der Hydrierung von Aldehyden aus der Roelen'schen Oxosynthese erhalten werden. Der Alkyl- bzw. Alkenylrest kann sich ferner auch von primären Alkoholen mit 12 bis 22, vorzugsweise 12 bis 14 Kohlenstoffatomen ableiten. Typische Beispiele sind Laurylalkohol, Myristylalkohol, Cetylalkohol, Palmoleylalkohol, Stearylalkohol, Isostearylalkohol, Oleylalkohol, Elaidylalkohol, Petroselinylalkohol, Arachylalkohol, Gadoleylalkohol, Behenylalkohol, Erucylalkohol, Brassidylalkohol sowie deren technische Gemische, die wie oben beschrieben erhalten werden können.

Weiterhin als Bestandteil der Fettsäuresalzgemische geeignet sind Hydroxymischether, die sich beispielsweise von Alkoxylaten von einwertigen aliphatischen, gesättigten, geradkettigen oder verzweigten Alkoholen mit 4 bis 18 Kohlenstoffatomen ableiten.

Beispiele für geeignete geradkettige Alkohole sind Butanol-1, Capron-, Önanth-, Capryl-, Pelargon-, Caprinalkohol, Undecanol-1, Laurylalkohol, Tridecanol-1, Myristylalkohol, Pentadecanol-1, Palmitylalkohol, Heptadecanol-1, Stearylalkohol, Nonadecanol-1, Arachidylalkohol, Heneicosanol-1, Behenylalkohol sowie deren technische Mischungen, wie sie bei der Hochdruckhydrierung von technischen Methylestern auf Basis von Fetten und Ölen anfallen. Beispiele für derartige verzweigte Alkohole sind so genannte Oxoalkohole, die meist 2 bis 4 Methylgruppen als Verzweigungen tragen und nach dem Oxoprozess hergestellt werden und so genannte Guerbetalkohole, die in 2-Stellung mit einer Alkylgruppe verzweigt sind. Geeignete Guerbetalkohole sind 2-Ethylhexanol, 2-Butyloctanol, 2-Hexyldecanol und/oder 2-Octyldodecanol.

Die Alkohole können beispielsweise in Form ihrer Alkoxylate eingesetzt, die durch Umsetzung der Alkohole in beliebiger Reihenfolge mit Ethylenoxid, Propylenoxid und/oder Butylenoxid auf bekannte Weise hergestellt werden.

Ebenfalls geeignet sind sind Fettalkoholpolyethylenglykol/polypropylenglykolether oder Fettalkoholpolypropylenglykol/polyethylenglykolether, die gegebenenfalls endgruppenverschlossen sind. Beispielsweise steht der Fettalkoholrest für einen aliphatischen, gesättigten, geradkettigen oder verzweigten Alkylrest mit 8 bis 16 C-Atomen. Es handelt sich bei den erfindungsgemäß einsetzbaren Fettalkoholpolyethylenglykol/polypropylenglykolethern oder Fettalkoholpolypropylenglykol/polyethylenglykolethern beispielsweise um Anlagerungsprodukte von 1 bis 20 Mol Ethylenoxid an monofunktionelle Alkohole. Als Alkohole sind die oben beschriebenen Alkohole wie Fettalkohole, Oxoalkohole und Guerbetalkohole geeignet. Ebenfalls geeignet sind von solchen Alkoholethoxylaten solche, die eine eingeengte Homologenverteilung aufweisen.

Die endgruppenverschlossenen Verbindungen sind beispielsweise mit einer Alkylgruppe mit 1 bis 8 C-Atomen verschlossen. Häufig werden derartige Verbindungen in der Literatur auch als Mischether bezeichnet. Geeignete Vertreter sind Methylgruppenverschlossene Verbindungen. Derartige Verbindungen können leicht durch Umsetzung der entsprechenden nicht end gruppen verschlossenen Fettalkoholpolyethylenglykol/polypropylenglykolether mit Methylchlorid in Gegenwart einer Base hergestellt werden.

Ebenfalls als Tenside oder Emulgatoren im Rahmen der Zusammensetzungen geeignet sind alkoxylierte Fettsäureniedrigalkylester. Typische Beispiele sind die formalen Einschubprodukte von durchschnittlich 1 bis 20 und vorzugsweise 5 bis 10 Mol Ethylen- und/oder Propylenoxid in die Methyl-, Ethyl-, Propyl-, Isopropyl-, Butyl- und tert.-Butylester von Capronsäure, Caprylsäure, 2-Ethylhexansäure, Caprinsäure, Laurinsäure, Isotridecansäure, Myristinsäure, Palmitinsäure, Palmoleinsäure, Stearinsäure, Isostearinsäure, Ölsäure, Elaidinsäure, Petroselinsäure, Linolsäure, Linolensäure, Elaeostearinsäure, Arachinsäure, Gadoleinsäure, Behensäure und Erucasäure sowie deren technische Mischungen. Üblicherweise erfolgt die Herstellung der Produkte durch Insertion der Alkoxide in die Carbonylesterbindung in Gegenwart spezieller Katalysatoren, wie z.B. calcinierter Hydrotalcit. Besonders bevorzugt sind Umsetzungsprodukte von durchschnittlich 5 bis 10 Mol Ethylenoxid in die Esterbindung von technischen Kokosfettsäuremethylestem.

Ebenfalls als Tenside oder Emulgatoren im Rahmen der Zusammensetzungen geeignet sind Aminoxide oder Alkylamido-aminoxide.

Eine Zusammensetzung kann darüber hinaus auch ein oder mehrere kationische Tenside enthalten. Als kationischen Tenside eignen sich insbesondere solche, welche eine quaternäre Ammoniumgruppe enthalten. Dabei kann es sich um kationische oder um amphotere, betainische Tenside handeln. Geeignete kationische Tenside enthalten Aminogruppen oder quaternisierte hydrophile Ammoniumgruppen, welche in Lösung eine positive Ladung tragen und durch die allgemeine Formel N⁽⁺⁾R¹R²R³R⁴ X⁽⁻⁾ dargestellt werden können, wobei R¹ bis R⁴ unabhängig voneinander aliphatische Gruppen, aromatische Gruppen, Alkoxygruppen, Polyoxyalkylengruppen, Alkylamidogruppen, Hydroxyalkylgruppen, Arylgruppen oder Alkarylgruppen mit jeweils 1 bis 22 C-Atomen bedeuten und X(-) ein kosmetisch verträgliches Anion darstellt, ausgewählt aus Halogen, Acetat, Phosphat, Nitrat oder Alkylsulfat, vorzugsweise ist es ein Chlorid.

Um die tensidischen Eigenschaften zu gewährleisten, weist mindestens einer der Reste R¹ bis R⁴ mindestens 8 C-Atome auf. Die aliphatischen Gruppen können zusätzlich zu den Kohlenstoffatomen und den Wasserstoffatomen auch Querverbindungen oder andere Gruppen wie z.B. weitere Aminogruppen enthalten. Beispiele für geeignete kationische Tenside sind insbesondere quaternäre Ammoniumverbindungen, Bevorzugt sind Ammoniumhalogenide, insbesondere die Chloride oder Bromide hiervon wie Alkyldimethylbenzylammoniumsalze, Alkyltrimethylammoniumsalze, Dialkyldimethylammoniumchloride und Trialkylmethylammoniumchloride oder die Bromide hiervon, beispielsweise Cetyltrimethylammoniumchlorid oder -bromid, Stearyltrimethylammoniumchlorid oder -bromid, Distearyltrimethylammoniumchlorid oder -bromid, Lauryldimethylbenzylammoniumchlorid oder -bromid, Tetradecyltrimethyl-ammoniumchloride oder - bromid, Alkyldimethylhydroxyethylammoniumchloride oder -bromide, Alkyltrimethylammoniumchlorid oder -bromid, Dialkyl-dimethylammoniumchlorid oder-bromid, Alkylpyridiniumsalze, beispielsweise Lauryl- oder Cetylpyridiniumchlorid, Alkylamidoethyltrimethylammonium-ethersulfate sowie Verbindungen mit kationische Charakter wie Aminoxide, beispielsweise Alkylmethylaminoxide oder Alkylaminoethyldimethylaminoxide.

In einer bevorzugten Ausführungsform enthalten die Zusammensetzungen 0 bis etwa 50 Gew.-%, beispielsweise etwa 0 bis etwa 50 oder etwa 1 bis etwa 30 oder etwa 2 bis 25 oder etwa 3 bis etwa 22 oder etwa 4 bis etwa 20 oder etwa 5 bis etwa 15 oder etwa 7 bis etwa 13 oder etwa 8 bis etwa 12, beispielsweise etwa 9 bis etwa 11 oder etwa 10 Gew.-%, anionische, kationische oder nichtionische Tenside, oder Gemische aus zwei oder mehr davon, beispielsweise ein Gemisch aus einem oder mehreren anionischen Tensiden und einem oder mehreren nichtionischen Tensiden oder einem oder mehreren kationischen Tensiden oder einem oder mehreren nichtionischen Tensiden, berechnet als Aktivsubstanz, bezogen auf die gesamte Zusammensetzung.

Bevorzugte Kolloide sind teilverseifte und vollverseifte Polyvinylalkohole; Polyvinylpyrrolidone, Polyvinylacetale, Polysaccharide in wasserlöslicher Form wie Stärken (Amylose und Amylopectin), Cellulosen und deren Carboxymethyl-, Methyl-, Hydroxyethyl-, Hydroxypropyl-Derivate, Proteine wie Casein oder Caseinat, Sojaprotein, Gelatine, Ligninsulfonate, synthetische Polymere wie Poly(meth)acrylsäure, Copolymerisate von (Meth)acrylaten mit carboxylfunktionellen Comonomereinheiten, Poly(meth)acrylamid, Polyvinylsulfonsäuren und deren wasserlöslichen Copolymere; Melaminformaldehydsulfonate, Naphthalinformaldehydsulfonate, Styrolmaleinsäure- und Vinylethermaleinsäure-Copolymere. Der Anteil an Kolloiden liegt bevorzugt zwischen 20 und 80 Gew.-%, insbesondere zwischen 50 und 60 %. Bevorzugt sind mindestens 2, 5 oder 10 und maximal 20, 50 oder 80 % Kolloide enthalten.

Bevorzugt werden als Kolloide teilverseifte oder vollverseifte Polyvinylalkohole mit einem Hydrolysegrad von 80 bis 100 Mol-%, insbesondere von 80 bis 95 Mol-% und einer Höpplerviskosität (in 4 %-iger wässriger Lösung) von 1 bis 30mPas, vorzugsweise 3 bis 15mPas (Methode nach Höppler bei 20 °C, DIN 53015), einsetzt. Bevorzugt sind auch teilverseifte oder vollverseifte, hydrophob modifizierte Polyvinylalkohole mit einem Hydrolysegrad von 80 bis 100 Mol-% und einer Höpplerviskosität in 4%-iger wässriger Lösung von 1 bis 30mPas, vorzugsweise 3 bis 15 mPas. Beispiele hierfür sind teilverseifte Copolymerisate von Vinylacetat mit hydrophoben Comonomeren wie Isopropenylacetat, Vinylpivalat, Vinylethylhexanoat, Vinylester von gesättigten alpha-verzweigten Monocarbonsäuren mit 5 bis 11 C-Atomen, Dialkylmaleinate und Dialkylfumarate wie Diisopropylmaleinat und Diisopropylfumarat, Vinylchlorid, Vinylalkylether wie Vinylbutylether, alpha-Olefine mit 2 bis 12 C-Atomen wie Ethen, Propen und Decen. Der Anteil der hydrophoben Einheiten beträgt vorzugsweise 0.1 bis 10 Gew.-%, bezogen auf das Gesamtgewicht des teil- oder vollverseiften Polyvinylalkohols. Besonders bevorzugt sind teilverseifte oder vollverseifte Copolymerisate von Vinylacetat mit Isopropenylacetat mit einem Hydrolysegrad von 95 bis 100 Mol-%. Es können auch Gemische der genannten Polyvinylalkohole eingesetzt werden.

Besonders bevorzugte Polymere sind solche, die in Wasser redispergierbar sind. Geeignete Polymerisate sind solche auf der Basis von einem oder mehreren Monomeren aus der Gruppe umfassend Vinylester von unverzweigten oder verzweigten Alkylcarbonsäuren mit 1 bis 15 C-Atomen, Methacrylsäureester und Acrylsäureester von Alkoholen mit 1 bis 15 C-Atomen, Vinylaromaten, Olefine, Diene und Vinylhalogenide. Weitere geeignete Polymere werden in der WO2004/103928 auf den Seiten 8 bis 10 genannt, auf die hier ausdrücklich Bezug genommen wird.

Zur Erhöhung der Lagerfähigkeit kann ein Antiblockmittel (Antibackmittel) zugesetzt werden. Beispiele für Antiblockmittel sind Calcium und Magnesiumcarbonat, Talg, Kieselsäure, Kaoline, Silicate, vorzugsweise mit Teilchengrößen im Bereich zwischen 10 nm und 100 µm. Der Anteil der Antiblockmittel an dem Hydrophobierungsmittel ist in bevorzugten Ausführungsformen zwischen 0,5 und 30, insbesondere zwischen 1 und 20 Gew.-%. Bevorzugt sind bis zu 5,10 oder 20 Gew.-% Antiblockmittel enthalten.

Bevorzugte Füllstoffe sind mineralische oder anorganische Füllstoffe, wie beispielsweise Tone, Sand, Kies, Schlacke, Glas, Kiesel-Gele, Sulfate, Oxide, Glas- und Mineralfasern, Kunststoff-Fasern, Mikrohohlkugeln, organische Leichtfüllstoffe (zum Beispiel Polystyrolschaum), Papierpulver, Holzspäne und Zellulosefasern. Die Füllstoffe können Bestandteil des Fettsäuresalzgemischs sein.

Als weitere Zusatzstoffe können beispielsweise Organo(poly)siloxane eingesetzt werden. Entsprechende Materialien sind in der DE 601 08 152 T2, insbesondere in den Absätzen [0015] bis [0017] offenbart, auf die hier ausdrücklich Bezug genommen wird.

Viskositätsverbesserer dienen beispielsweise dazu, die Fließeigenschaften oder die Verarbeitbarkeit eines Fettsäuresalzgemischs zu verändern. Zusatzstoffe, die das Fließverhalten des Putzes verändern, werden auch als rheologieverändernde Zusatzstoffe bezeichnet.

Als Pigmente können beispielsweise Titandioxid, Zinkoxid oder Zinksulfid eingesetzt werden.

Ein Fettsäuresalzgemisch kann beispielsweise als Granulat, Pulver, Lösung, Dispersion oder Emulsion vorliegen. Es ist in einigen Fällen bevorzugt, wenn das Fettsäuresalzgemisch beispielsweise in Form eines Granulats bereitgestellt wird. Ein solches granuliertes Fettsäuresalzgemisch kann nach üblichen oder bekannten Granulierungsverfahren hergestellt werden. In einer besonders bevorzugten Ausführungsform der Erfindung ist das Fettsäuresalzgemisch ein Granulat, das mindestens die folgenden Komponenten enthält:
- 35 bis 95 oder 40 bis 95 Gew.-% Fettsäuresalze,
- 1 bis 20 Gew.-% mindestens eines ein- oder mehrwertigen Alkohols
- 4 bis 50 Gew.-% eines wasserlöslichen oder wasserdispergierbaren Bindemittels
- 0 bis 60 oder 0 bis 60 Gew.-% mindestens eines Emulgators oder Tensids oder beidem und
- 0 bis 30 Gew.-% weiterer Zusatzstoffe.

In einer weiteren Ausführungsform der Erfindung kann das Fettsäuresalzgemisch als Pulver eingesetzt werden. Solche Pulver können beispielsweise durch Vermischen mit einem Baumaterial, beispielsweise einem Mörtel, auf die Oberfläche der Körner des Baumaterials aufgebracht werden.

Das Fettsäuresalzgemisch kann auch auf einem Trägermaterial vorliegen und beispielsweise eine Struktur entsprechend einer Kern-Schale-Struktur aufweisen. Unter einer Kern-Schale-Struktur wird im Rahmen der vorliegenden Erfindung eine Struktur verstanden, bei der sich die Zusammensetzung des Feststoffteilchens, ausgehend vom Mittelpunkt des Teilchens, zu den Rändern hin derart ändert, dass der Rand eine andere Zusammensetzung aufweist als die Mitte. Derartige Änderungen können im Rahmen der vorliegenden Erfindung kontinuierlich oder im Wesentlichen diskontinuierlich oder als Gemisch aus beiden Phänomenen erfolgen. Unter einer "überwiegenden Kern-Schale-Struktur" wird im Rahmen der vorliegenden Erfindung der Befund verstanden, dass sich die Kern-Schale-Strukturfür mindestens etwa 40 % der Oberfläche des Feststoffeilchens nachweisen lässt. Entsprechende Nachweismethoden sind dem Fachmann bekannt, beispielsweise kann eine elektronenmikroskopische Untersuchung der Feststoffteilchen erfolgen.

Als Kernmaterialien werden im Rahmen der vorliegenden Erfindung beispielsweise anorganische Träger wie Kreide oder Titandioxid, anorganische poröse Träger wie Montmorillonit, Bleicherde und dergleichen, organische Träger wie Stärke, Mikrozellulose und Ähnliches sowie Zeolithe oder Mikrohohlkörper oder Gemische aus zwei oder mehr davon eingesetzt.

Gegenstand der Erfindung ist demnach ein Baumaterial, das ein Fettsäuresalzgemisch gemäß Anspruch 1 enthält. In bevorzugten Ausführungsformen der Erfindung enthält das Baumaterial ein Bindemittel, beispielsweise Mörtel, Kalk, Zement oder Beton. In einer weiteren bevorzugten Ausführungsform enthält es ein Lösungsmittel, insbesondere Wasser. In einer bevorzugten Ausführungsform der Erfindung ist das mineralische Baumaterial ausgewählt aus der Gruppe bestehend aus Estrich, Putz, Baukleber, Spachtelmasse, Verlaufsmasse, Dichtschlamm, Fugenmörtel, Hybridmaterialien wie Leichtbeton mit Holzspänen oder Holzmehl, Kunstharzputzen und Farbe. Es ist im Rahmen der vorliegenden Erfindung bevorzugt, wenn es sich bei dem Baumaterial nicht um Gips handelt.

Der Begriff "Putz" bezeichnet den am Bauwerk angebrachten und verfestigten Festmörtel. In einer besonders bevorzugten Ausführungsform ist der Putz ein Zementputz, insbesondere ein Kalkzementputz. Ein Putzmörtel enthält mindestens ein Bindemittel. Als Bindemittel können beispielsweise Zemente, Kalk-Zement-Gemische, oder Kalk-Gemische eingesetzt werden. Die Herstellung und Verarbeitung von Putzmörteln als Baustoff zur Herstellung von Putz wird gemäß der DIN 18550 in fünf Gruppen unterteilt. Das Hydrophobierungsmittel wird beispielsweise für Putzmörtel der Gruppen Kalkmörtel (Gemisch aus Sand und gebranntem Kalk), Kalk-Zement-Mörtel (Gemisch aus Sand, gebranntem Kalk und Zement), Zementmörtel (Gemische aus Sand und Zement) und Anhydritmörtel (Gemische aus Sand und Anhydrit) verwendet. Als Außenputze werden insbesondere Kalk-Zement-Mörtel und Zementmörtel verwendet.

Das erfindungsgemäße Baumaterial kann beispielsweise mit den oben bezeichneten Zusatzstoffen verarbeitet werden. Es liegt im Ermessen des Fachmanns, ob diese Zusatzstoffe dem Hydrophobierungsmittel oder unmittelbar dem Baumaterial zugefügt werden.

Der bevorzugte Anteil des Hydrophobierungsmittels an dem Baumaterial liegt bevorzugt zwischen 0,01 und 5 Gew.-%, besonders bevorzugt zwischen 0,2 und 3 Gew.-% und zwischen 0,5 und 1 Gew.-%. In besonders bevorzugten Ausführungsformen sind mindestens 0,01, 0,02 oder 0,5 Gew.-% und/oder bis zu 0,5, 1 oder 2 Gew.-% des Hydrophobierungsmittels enthalten.

Gegenstand der Erfindung ist auch ein hydrophobiertes Bauteil, erhältlich durch ein Verfahren, bei dem ein Fettsäuresalzgemisch gemäß Anspruch 1 einem mineralischen Baumaterial zugesetzt wird, vermischt wird und das Baumaterial ausgehärtet wird. Vorzugsweise handelt es sich bei dem Baumaterial nicht um Gips.

Es handelt sich bei den Metallverbindungen von Metallen aus der Gruppe der Alkalimetalle, Erdalkalimetalle, Zink, Aluminium oder der seltenen Erden, die zu einer Salzbildung mit Fettsäuren unter den gewählten Verfahrensbedingungen in der Lage sind, um basische Verbindungen, insbesondere um Verbindungen aus der Gruppe der Oxide, Hydroxide, Carbonate.

So können beispielsweise als Verbindungen von Metallen aus der Gruppe der Alkalimetalle, Erdalkalimetalle, Zink, Aluminium oder der seltenen Erden, oder als Ammoniumverbindungen, die zu einer Salzbildung mit Fettsäuren unter den gewählten Verfahrensbedingungen in der Lage sind, Calciumhydroxid, Natriumhydroxid, Kaliumhydroxid, oder Ammoniumhydroxid eingesetzt werden.

Als Edukt wird beispielsweise ein Gemisch von Fettsäureestern, insbesondere von Triglyzeriden, eingesetzt. Besonders geeignet ist das erfindungsgemäße Verfahren wenn als Gemisch von Fettsäureestern ein natürliches Fett oder Öl eingesetzt wird.

Das erfindungsgemäße Verfahren lässt sich beispielsweise auch dahingehend durchführen, dass die mindestens zwei Verbindungen von Metallen aus der Gruppe der Alkalimetalle, Erdalkalimetalle, Zink, Aluminium oder der seltenen Erden, oder Aminoverbindungen die zu einer Salzbildung mit Fettsäuren unter den gewählten Verfahrensbedingungen in der Lage sind in einer Menge von 5 bis 95 Gew.-%, bezogen auf das Gewicht des Fettsäuregemischs oder des Gemischs von Fettsäureestern oder des Gemischs von Fettsäuren und Fettsäureestern, eingesetzt werden.

In weiteren bevorzugten Ausführungsformen der Erfindung sind Zusatzstoffe enthalten, wie oben bei den Fettsäuresalzgemischen beschrieben. Besonders bevorzugt sind dabei Lösungsmittel, Lösungsvermittler, Füllstoffe, weitere Hydrophobierungsmittel, Bindemittel, Tenside, Emulgatoren, Viskositätsverbesserer, oberflächenaktive Substanzen, Pigmente, Farbstoffe, Konservierungsstoffe, Geliermittel, Antibackmittel, pH-Modifikationsmittel, Puffer, Reaktionsbeschleuniger, Reaktionsverzögerer, Kolloide, Polymere und/oder Luftschleppmittel enthalten. In bevorzugten Ausführungsformen erfolgt die Verwendung als Granulat, Pulver, Lösung, Dispersion oder Emulsion.

Gegenstand der Erfindung ist auch ein Verfahren zur Hydrophobierung von mineralischen Baumaterialien, wobei ein Fettsauresalzgemisch gemäß Anspruch 1 einem mineralischen Baumaterial zugesetzt wird und vermischt wird. Die Vermischung erfolgt vor der Aushärtung des Baumaterials. Dieses Verfahren wird auch als "sekundäre Hydrophobierung" bezeichnet, im Gegensatz zur "primären Hydrophobierung", bei der das Hydrophobierungsmittel nachträglich auf das ausgehärtete Baumaterial aufgebracht wird. Dem Baumaterial werden dabei gegebenenfalls neben dem Fettsäuresalzgemisch als Hydrophobiermittel weitere übliche Zusatzmittel zugesetzt, insbesondere die oben erwähnten. Diese sind beispielsweise Thixotropiermittel, die die Konsistenz und die Standfestigkeit eines Mörtels verbessern. Spezielle Thixotropiermittel sind solche, die das Fließverhalten des Putzes verändern und als Rheologie verändernde Zusatzmittel bezeichnet werden.

### Ausführungsbeispiele:

| **Nr.** | **Rohstoff** | **Menge** | **Bemerkung** |
|---|---|---|---|
| 1. | Palmkernfett | 250g | |
| 2. | Natriumhydroxid | 45g | Plätzchen |
| 3. | Wasser | 600g | |

### 1. Schritt

### Durchführung

2 und 3 wurden vermischt. 1 wurde bei 50°C aufgeschmolzen und langsam durch zutropfen mit der Lösung aus 2 in 3 vermischt Dann wurde weiter erhitzt und bei 80-100°C für 90 Minuten umgesetzt. Anschließend wurde der Niederschlag mittels Kochsalz zum koagulieren gebracht, abfiltriert und gewaschen um das gebildete Glycerin und das gebildete Kochsalz zu entfernen. Anschließend wurde in Aceton aufgeschlämmt. Dabei gingen Wasser und Glycerin in Lösung und die Fettsäuresalze blieben ungelöst. Diese wurden dann abfiltriert. Das Produkt wurde erst auf dem Rotavapor vom Aceton befreit und dann 6h bei 110°C im Trockenschrank getrocknet.

| **Nr.** | **Rohstoff** | **Menge** | **Bemerkung** |
|---|---|---|---|
| 1. | Produkt aus erstem Schritt | 80g | |
| 2. | Wasser | 21 | |
| 3. | Calciumchlorid | 21g | reiner Stoff als 30%ig wässrige Lösung |

### 2. Schritt

### Durchführung

Produkt aus dem ersten Schritt wurde in Wasser gelöst und bei 70°C langsam tropfenweise mit CaCl₂ versetzt. Der Niederschlag wurde abfiltriert und mit 11 Wasser gewaschen. Anschließend wurde bei 50°C 2 Tage getrocknet.

### Verwendete Rohstoffe

| **Nr.** | **Rohstoff** | **Menge** | **Bemerkung** | |
|---|---|---|---|---|
| 4. | Natriumsalz (1.Schritt) | 2,5g | A | B |
| 5. | Calciumsalz (2.Schritt) | 7,5g | A | B |
| 6. | Glycerin | 1,0g | | B |

### Durchführung

Mischungen A und B wurden im Mörser hergestellt, Mischung A ist nicht erfindungsgemäß.

### Mischung C

Palmkernfett wurde mit Natriumhydroxid und Calciumhydroxid in einem Druckreaktor mit einer katalytischen Menge Wasser bei 140°C gespalten. Das Verhältnis an Natrium und Calciumsalz des Palmkernfettes entsprach der Mischung B. Das entstandene Glycerin verblieb homogen eingemischt im Produkt.

Folgende W 24 Werte wurden nach DIN EN ISO 15148 mit einer Einsatzmenge von 0,25% in einem Kalkzementputz ermittelt

| | |
|---|---|
| Mischung A | 3,53% |
| Mischung B (mit Glycerin) | 2,18% |
| Mischung C (in situ) | 1,27% |
| Mischung D (aus Calciumstearat/Natriumoleat 75:25) | 2,85% |

## Patentansprüche

1. Mineralisches Baumaterial enthaltend ein Fettsäuresalzgemisch, enthaltend ein Gemisch aus Fettsäuresalzen von mindestens zwei verschiedenen Metallkationen oder zwei verschiedenen Ammoniumkationen oder einem Gemisch aus mindestens einem Metallkation und mindestens einem Ammoniumkation, wobei die Metallkationen aus der Gruppe bestehend aus Alkalimetallen, Erdalkalimetallen, Zink, Aluminium und seltenen Erden ausgewählt werden und wobei der Anteil der Fettsäuresalze von Fettsäuren mit 8 bis 17 C-Atomen, bezogen auf die Gesamtmenge der Fettsäuresalze im Fettsäuresalzgemisch, 20 Gew.-% oder mehr als 20 Gew.-% ausmacht und der Anteil an Fettsäuren mit 8 bis 14 C-Atomen 10 Gew.-% oder mehr als 10 Gew.-%, bezogen auf die Gesamtmenge der Fettsäuresalze im Fettsäuresalzgemisch, wobei das Fettsäuresalzgemisch einen mehrwertigen Alkohol enthält, wobei der mehrwertige Alkohol nur Kohlenstoff, Wasserstoff und Sauerstoff als atomare Bestandteile aufweist.

2. Mineralisches Baumaterial enthaltend ein Fettsäuresalzgemisch nach Anspruch 1, **dadurch gekennzeichnet, dass** mindestens ein Fettsäuresalz eines der Metalle Natrium-, Kalium-, Zink, Magnesium oder Calcium enthält.

3. Mineralisches Baumaterial enthaltend ein Fettsäuresalzgemisch nach Anspruch 1 oder 2, **dadurch gekennzeichnet, dass** es mindestens einen Zusatzstoff ausgewählt aus Lösungsmitteln, Lösungsvermittlern, Füllstoffen, weiteren Hydrophobierungsmitteln, Bindemitteln, Tensiden, Emulgatoren, Viskositätsverbesserern, oberflächenaktiven Substanzen, Pigmenten, Farbstoffen, Konservierungsstoffen, Geliermitteln, Antibackmitteln, pH-Modifikationsmitteln, Puffern, Reaktionsbeschleunigern, Reaktionsverzögerern, Kolloiden, Polymeren und/oder Luftschleppmitteln enthält.

4. Mineralisches Baumaterial enthaltend ein Fettsäuresalzgemisch nach einem der Ansprüche 1 bis 43, **dadurch gekennzeichnet, dass** der Anteil der Fettsäuresalze von Fettsäuren mit 8 bis 14 C-Atomen mehr als 30 Gew.-%, bezogen auf die Gesamtmenge der Fettsäuresalze im Fettsäuresalzgemisch ausmacht.

5. Mineralisches Baumaterial enthaltend ein Fettsäuresalzgemisch nach einem der Ansprüche 1 bis 4, **dadurch gekennzeichnet, dass** das Fettsäuresalz, das an den gesamten Fettsäuresalzen den größten Anteil in Gewichtsprozent ausmacht, ein Salz einer Fettsäure mit 8 bis 17 C-Atomen ist.

6. Mineralisches Baumaterial enthaltend ein Fettsäuresalzgemisch nach einem der Ansprüche 1 bis 5, **dadurch gekennzeichnet, dass** die durchschnittliche Kettenlänge der gesamten Fettsäuresalze im Fettsäuresalzgemisch in einem Bereich von 12 bis 16 C-Atomen liegt.

7. Mineralisches Baumaterial enthaltend ein Fettsäuresalzgemisch nach einem der Ansprüche 1 bis 6, **dadurch gekennzeichnet, dass** die Fettsäuresalze ausgewählt sind aus der Gruppe bestehend aus Fettsäuresalzen der Capryl-, Pelargon-, Caprin-, Laurin-, Myristin-, Palmitin-, Margarin-, Undecylen- und Palmitoleinsäure.

8. Mineralisches Baumaterial enthaltend ein Fettsäuresalzgemisch nach einem der Ansprüche 1 bis 7, **dadurch gekennzeichnet, dass** die Summe der Anteile der Salze von Fettsäuren mit mehr 12 bis 16 C-Atomen im Fettsäurerest an den gesamten Fettsäuresalzen mehr als 50 Gew.-% ausmacht.

9. Mineralisches Baumaterial enthaltend ein Fettsäuresalzgemisch nach einem der Ansprüche 1 bis 98, **dadurch gekennzeichnet, dass** der Gesamtanteil der Fettsäuresalze an Fettsäuresalzgemisch zwischen 5 und 95 Gew.-% liegt.

10. Mineralisches Baumaterial enthaltend ein Fettsäuresalzgemisch nach einem der Ansprüche 1 bis 9, **dadurch gekennzeichnet, dass** die Fettsäuresalze Hydrolyseprodukte eines natürlichen Fetts oder Öls sind.

11. Mineralisches Baumaterial enthaltend ein Fettsäuresalzgemisch nach einem der Ansprüche 1 bis 10, **dadurch gekennzeichnet, dass** es folgende Zusammensetzung aufweist:
5 bis 95 Gew.-% Fettsäuresalze,
5 bis 50 Gew.-% ein- oder mehrwertige Alkohole,
0 bis 60 Gew.-% Emulgatoren
0 bis 30 % Gew.-% Antiblockmittel,
0 bis 30 % Gew.-% Bindemittel,
0 bis 50% Gew.-% Lösungsmittel,
0 bis 30 % Gew.-% Polymere.

12. Mineralisches Baumaterial enthaltend ein Fettsäuresalzgemisch nach einem der Ansprüche 1 bis 11, **dadurch gekennzeichnet, dass** es ein Granulat, ein Pulver, eine Lösung, eine Dispersion oder eine Emulsion ist.

13. Baumaterial nach einem der Ansprüche 1 bis 12 **dadurch gekennzeichnet, dass** es ein mineralisches Bindemittel enthält.

14. Baumaterial nach einem der Ansprüche 1 bis 13, **dadurch gekennzeichnet, dass** es Mörtel, Zement, Beton oder Lösungsmittel, oder ein Gemisch aus zwei oder mehr davon, enthält.

15. Baumaterial nach einem der Ansprüche 1 bis 14, **dadurch gekennzeichnet, dass** es ausgewählt ist aus der Gruppe bestehend aus Putz, Baukleber, Spachtelmasse, Verlaufsmasse, Dichtschlamm, Fugenmörtel und Farbe.

16. Hydrophobiertes Bauteil, erhältlich durch vermischen eines Fettsäuresalzgemischs enthaltend ein Gemisch aus Fettsäuresalzen von mindestens zwei verschiedenen Metallkationen oder zwei verschiedenen Ammoniumkationen oder einem Gemisch aus mindestens einem Metallkation und mindestens einem Ammoniumkation, wobei die Metallkationen aus der Gruppe bestehend aus Alkalimetallen, Erdalkalimetallen, Zink, Aluminium und seltenen Erden ausgewählt werden und wobei der Anteil der Fettsäuresalze von Fettsäuren mit 8 bis 17 C-Atomen, bezogen auf die Gesamtmenge der Fettsäuresalze im Fettsäuresalzgemisch, 20 Gew.-% oder mehr als 20 Gew.-% ausmacht und der Anteil an Fettsäuren mit 8 bis 14 C-Atomen 10 Gew.-% oder mehr als 10 Gew.-%, bezogen auf die Gesamtmenge der Fettsäuresalze im Fettsäuresalzgemisch, wobei das Fettsäuresalzgemisch einen mehrwertigen Alkohol enthält, wobei der mehrwertige Alkohol nur Kohlenstoff, Wasserstoff und Sauerstoff als atomare Bestandteile aufweist, mit einem mineralischen Baumaterial und anschließendem aushärten des Baumaterials.

17. Verfahren zur Hydrophobierung von mineralischen Baumaterialien, wobei ein Fettsäuresalzgemisch enthaltend ein Gemisch aus Fettsäuresalzen von mindestens zwei verschiedenen Metallkationen oder zwei verschiedenen Ammoniumkationen oder einem Gemisch aus mindestens einem Metallkation und mindestens einem Ammoniumkation, wobei die Metallkationen aus der Gruppe bestehend aus Alkalimetallen, Erdalkalimetallen, Zink, Aluminium und seltenen Erden ausgewählt werden und wobei der Anteil der Fettsäuresalze von Fettsäuren mit 8 bis 17 C-Atomen, bezogen auf die Gesamtmenge der Fettsäuresalze im Fettsäuresalzgemisch, 20 Gew.-% oder mehr als 20 Gew.-% ausmacht und der Anteil an Fettsäuren mit 8 bis 14 C-Atomen 10 Gew.-% oder mehr als 10 Gew.-%, bezogen auf die Gesamtmenge der Fettsäuresalze im Fettsäuresalzgemisch, wobei das Fettsäuresalzgemisch einen mehrwertigen Alkohol enthält, wobei der mehrwertige Alkohol nur Kohlenstoff, Wasserstoff und Sauerstoff als atomare Bestandteile aufweist, einem mineralischen Baumaterial zugesetzt wird und vermischt wird.

## Claims

1. Mineral construction material comprising a fatty acid salt mixture comprising a mixture of fatty acid salts of at least two different metal cations or two different ammonium cations or a mixture of at least one metal cation and at least one ammonium cation, the metal cations being selected from the group consisting of alkali metals, alkaline earth metals, zinc, aluminum and rare earths, and the proportion of the fatty acid salts of fatty acids having 8 to 17 carbon atoms, based on the total amount of the fatty acid salts in the fatty acid salt mixture, amounting to 20% by weight or more than 20% by weight, and the proportion of fatty acids having 8 to 14 carbon atoms amounting to 10% by weight or more than 10% by weight, based on the total amount of the fatty acid salts in the fatty acid salt mixture, the fatty acid salt mixture containing a polyhydric alcohol, the polyhydric alcohol having only carbon, hydrogen and oxygen as atomic constituents.

2. Mineral construction material comprising a fatty acid salt mixture according to Claim 1, **characterized in that** at least one fatty acid salt contains one of the metals sodium, potassium, zinc, magnesium or calcium.

3. Mineral construction material comprising a fatty acid salt mixture according to Claim 1 or 2, **characterized in that** it contains at least one additive selected from solvents, solubilizers, fillers, further hydrophobing agents, binders, surfactants, emulsifiers, viscosity improvers, surfactants, pigments, dyes, preservatives, gelating agents, anticaking agents, pH modifiers, buffers, reaction accelerants, reaction retardants, colloids, polymers and/or air entrainers.

4. Mineral construction material comprising a fatty acid salt mixture according to any of Claims 1 to 3, **characterized in that** the proportion of the fatty acid salts of fatty acids having 8 to 14 carbon atoms amounts to more than 30% by weight, based on the total amount of the fatty acid salts in the fatty acid salt mixture.

5. Mineral construction material comprising a fatty acid salt mixture according to any of Claims 1 to 4, **characterized in that** the fatty acid salt which amounts to the greatest proportion in percent by weight of all of the fatty acid salts is a salt of a fatty acid having 8 to 17 carbon atoms.

6. Mineral construction material comprising a fatty acid salt mixture according to any of Claims 1 to 5, **characterized in that** the average chain length of all of the fatty acid salts in the fatty acid salt mixture is within a range from 12 to 16 carbon atoms.

7. Mineral construction material comprising a fatty acid salt mixture according to any of Claims 1 to 6, **characterized in that** the fatty acid salts are selected from the group consisting of fatty acid salts of caprylic acid, pelargonic acid, capric acid, lauric acid, myristic acid, palmitic acid, margaric acid, undecylenic acid and palmitoleic acid.

8. Mineral construction material comprising a fatty acid salt mixture according to any of Claims 1 to 7, **characterized in that** the sum of the proportions of the salts of fatty acids having more than 12 to 16 carbon atoms in the fatty acid radical in all of the fatty acid salts amounts to more than 50% by weight.

9. Mineral construction material comprising a fatty acid salt mixture according to any of Claims 1 to 8, **characterized in that** the total proportion of the fatty acid salts in the fatty acid salt mixture is between 5 and 95% by weight.

10. Mineral construction material comprising a fatty acid salt mixture according to any of Claims 1 to 9, **characterized in that** the fatty acid salts are hydrolysis products of a natural fat or oil.

11. Mineral construction material comprising a fatty acid salt mixture according to any of Claims 1 to 10, **characterized in that** it has the following composition:
5 to 95% by weight of fatty acid salts,
5 to 50% by weight of mono- or polyhydric alcohols,
0 to 60% by weight of emulsifiers,
0 to 30% by weight of antiblocking agents,
0 to 30% by weight of binders,
0 to 50% by weight of solvents,
0 to 30% by weight of polymers.

12. Mineral construction material comprising a fatty acid salt mixture according to any of Claims 1 to 11, **characterized in that** it is a granule, a powder, a solution, a dispersion or an emulsion.

13. Construction material according to any of Claims 1 to 12, **characterized in that** it contains a mineral binder.

14. Construction material according to any of Claims 1 to 13, **characterized in that** it contains mortar, cement, concrete or solvent, or a mixture of two or more thereof.

15. Construction material according to any of Claims 1 to 14, **characterized in that** it is selected from the group consisting of render, construction adhesive, spackling compound, leveling compound, sealing compound, jointing mortar and paint.

16. Hydrophobed component obtainable by mixing a fatty acid salt mixture comprising a fatty acid salt mixture comprising a mixture of fatty acid salts of at least two different metal cations or two different ammonium cations or a mixture of at least one metal cation and at least one ammonium cation, the metal cations being selected from the group consisting of alkali metals, alkaline earth metals, zinc, aluminum and rare earths, and the proportion of the fatty acid salts of fatty acids having 8 to 17 carbon atoms, based on the total amount of the fatty acid salts in the fatty acid salt mixture, amounting to 20% by weight or more than 20% by weight, and the proportion of fatty acids having 8 to 14 carbon atoms amounting to 10% by weight or more than 10% by weight, based on the total amount of the fatty acid salts in the fatty acid salt mixture, the fatty acid salt mixture containing a polyhydric alcohol, the polyhydric alcohol having only carbon, hydrogen and oxygen as atomic constituents, with a mineral construction material and then setting the construction material.

17. Process for hydrophobing mineral construction materials, wherein a fatty acid salt mixture comprising a fatty acid salt mixture comprising a mixture of fatty acid salts of at least two different metal cations or two different ammonium cations or a mixture of at least one metal cation and at least one ammonium cation, the metal cations being selected from the group consisting of alkali metals, alkaline earth metals, zinc, aluminum and rare earths, and the proportion of the fatty acid salts of fatty acids having 8 to 17 carbon atoms, based on the total amount of the fatty acid salts in the fatty acid salt mixture, amounting to 20% by weight or more than 20% by weight, and the proportion of fatty acids having 8 to 14 carbon atoms amounting to 10% by weight or more than 10% by weight, based on the total amount of the fatty acid salts in the fatty acid salt mixture, the fatty acid salt mixture containing a polyhydric alcohol, the polyhydric alcohol having only carbon, hydrogen and oxygen as atomic constituents, is added to a mineral construction material and mixed.

## Revendications

1. Matériau de construction minéral contenant un mélange de sels d'acide gras d'au moins deux cations métalliques différents ou deux cations d'ammonium différents ou d'un mélange d'au moins un cation métallique et d'au moins un cation d'ammonium, les cations métalliques étant choisis dans le groupe constitué par les métaux alcalins, les métaux alcalino-terreux, le zinc, l'aluminium et les terres rares et la proportion des sels d'acide gras comprenant 8 à 17 atomes de carbone, par rapport à la quantité totale des sels d'acide gras dans le mélange de sels d'acide gras, représentant 20% en poids ou plus de 20% en poids et la proportion d'acides gras comprenant 8 à 14 atomes de carbone représentant 10% en poids ou plus de 10% en poids, par rapport à la quantité totale des sels d'acide gras dans le mélange de sels d'acide gras, le mélange de sels d'acide gras contenant un alcool polyvalent, l'alcool polyvalent présentant seulement le carbone, l'hydrogène et l'oxygène comme constituants atomiques.

2. Matériau de construction minéral, contenant un mélange de sels d'acide gras selon la revendication 1, **caractérisé en ce qu'**au moins un sel d'acide gras contient un des métaux sodium, potassium, zinc, magnésium ou calcium.

3. Matériau de construction minéral, contenant un mélange de sels d'acide gras selon la revendication 1 ou 2, **caractérisé en ce qu'**il contient au moins un additif choisi parmi les solvants, les promoteurs de solubilisation, les charges, d'autres agents d'hydrofugation, les liants, les tensioactifs, les émulsifiants, les agents d'amélioration de la viscosité, les substances tensioactives, les pigments, les colorants, les conservateurs, les gélifiants, les agents antiagglomérants, les agents de modification du pH, les tampons, les accélérateurs de réaction, les retardateurs de réaction, les colloïdes, les polymères et/ou les agents d'entraînement d'air.

4. Matériau de construction minéral, contenant un mélange de sels d'acide gras selon l'une quelconque des revendications 1 à 3, **caractérisé en ce que** la proportion des sels d'acide gras comprenant 8 à 14 atomes de carbone, par rapport à la quantité totale des sels d'acide gras dans le mélange de sels d'acide gras, représente plus de 30% en poids.

5. Matériau de construction minéral, contenant un mélange de sels d'acide gras selon l'une quelconque des revendications 1 à 4, **caractérisé en ce que** le sel d'acide gras, qui représente la proportion la plus importante en pourcentage en poids par rapport à la totalité des sels d'acide gras, est un sel d'un acide gras comprenant 8 à 17 atomes de carbone.

6. Matériau de construction minéral, contenant un mélange de sels d'acide gras selon l'une quelconque des revendications 1 à 5, **caractérisé en ce que** la longueur de chaîne moyenne de la totalité des sels d'acide gras dans le mélange de sels d'acide gras se situe dans une plage de 12 à 16 atomes de carbone.

7. Matériau de construction minéral, contenant un mélange de sels d'acide gras selon l'une quelconque des revendications 1 à 6, **caractérisé en ce que** les sels d'acide gras sont choisis dans le groupe constitué par les sels d'acide gras de l'acide caprylique, pélargonique, caprique, laurique, myristique, palmitique, margarique, undécylénoïque et palmitoléique.

8. Matériau de construction minéral, contenant un mélange de sels d'acide gras selon l'une quelconque des revendications 1 à 7, **caractérisé en ce que** la somme des proportions des sels d'acide gras comprenant plus de 12 à 16 atomes de carbone dans le radical d'acide gras par rapport à la totalité des sels d'acide gras représente plus de 50% en poids.

9. Matériau de construction minéral, contenant un mélange de sels d'acide gras selon l'une quelconque des revendications 1 à 8, **caractérisé en ce que** la proportion totale des sels d'acide gras par rapport au mélange de sels d'acide gras se situe entre 5 et 95% en poids.

10. Matériau de construction minéral, contenant un mélange de sels d'acide gras selon l'une quelconque des revendications 1 à 9, **caractérisé en ce que** les sels d'acide gras sont des produits d'hydrolyse d'une graisse ou d'une huile naturelle.

11. Matériau de construction minéral, contenant un mélange de sels d'acide gras selon l'une quelconque des revendications 1 à 10, **caractérisé en ce qu'**il présente la composition suivante :
5 à 95% en poids de sels d'acide gras,
5 à 50% en poids d'alcools monovalents ou polyvalents,
0 à 60% en poids d'émulsifiants,
0 à 30% en poids d'agents antiagglomérants,
0 à 30% en poids de liants,
0 à 50% en poids de solvants,
0 à 30% en poids de polymères.

12. Matériau de construction minéral, contenant un mélange de sels d'acide gras selon l'une quelconque des revendications 1 à 11, **caractérisé en ce qu'**il s'agit d'un granulat, d'une poudre, d'une solution, d'une dispersion ou d'une émulsion.

13. Matériau de construction selon l'une quelconque des revendications 1 à 12, **caractérisé en ce qu'**il contient un liant minéral.

14. Matériau de construction selon l'une quelconque des revendications 1 à 13, **caractérisé en ce qu'**il contient du mortier, du ciment, du béton ou du solvant ou un mélange de deux ou de plus de deux de ceux-ci.

15. Matériau de construction selon l'une quelconque des revendications 1 à 14, **caractérisé en ce qu'**il est choisi dans le groupe constitué par un enduit, un adhésif de construction, un mastic, une masse d'étalement, un coulis d'étanchéité, un mortier à jointoyer et une peinture.

16. Pièce hydrofugée, pouvant être obtenue par le mélange d'un mélange de sels d'acide gras contenant un mélange de sels d'acide gras d'au moins deux cations métalliques différents ou deux cations d'ammonium différents ou d'un mélange d'au moins un cation métallique et d'au moins un cation d'ammonium, les cations métalliques étant choisis dans le groupe constitué par les métaux alcalins, les métaux alcalino-terreux, le zinc, l'aluminium et les terres rares et la proportion des sels d'acide gras comprenant 8 à 17 atomes de carbone, par rapport à la quantité totale des sels d'acide gras dans le mélange de sels d'acide gras, représentant 20% en poids ou plus de 20% en poids et la proportion d'acides gras comprenant 8 à 14 atomes de carbone représentant 10% en poids ou plus de 10% en poids, par rapport à la quantité totale des sels d'acide gras dans le mélange de sels d'acide gras, le mélange de sels d'acide gras contenant un alcool polyvalent, l'alcool polyvalent présentant seulement le carbone, l'hydrogène et l'oxygène comme constituants atomiques, avec un matériau de construction minéral et durcissement consécutif du matériau de construction.

17. Procédé pour l'hydrofugation de matériaux de construction minéraux, un mélange de sels d'acide gras contenant un mélange de sels d'acide gras d'au moins deux cations métalliques différents ou deux cations d'ammonium différents ou d'un mélange d'au moins un cation métallique et d'au moins un cation d'ammonium, les cations métalliques étant choisis dans le groupe constitué par les métaux alcalins, les métaux alcalino-terreux, le zinc, l'aluminium et les terres rares et la proportion des sels d'acide gras comprenant 8 à 17 atomes de carbone, par rapport à la quantité totale des sels d'acide gras dans le mélange de sels d'acide gras, représentant 20% en poids ou plus de 20% en poids et la proportion d'acides gras comprenant 8 à 14 atomes de carbone représentant 10% en poids ou plus de 10% en poids, par rapport à la quantité totale des sels d'acide gras dans le mélange de sels d'acide gras, le mélange de sels d'acide gras contenant un alcool polyvalent, l'alcool polyvalent présentant seulement le carbone, l'hydrogène et l'oxygène comme constituants atomiques, étant additionné d'un matériau de construction minéral et mélangé.
